# FASCICULE DE BREVET EUROPEEN

(11) **EP 2 638 792 B1**
(45) Date de publication et mention de la délivrance du brevet: **03.06.2020**
(21) Numéro de dépôt: 13159202.4
(22) Date de dépôt: 14.03.2013
(51) Int. Cl.: A01C 7/20

(54) **Semoir avec un réglage de la profondeur amélioré**
Drillmaschine mit einer verbesserten Tiefenverstellung
Seed drill with an improved depth adjustment

(30) Priorité: 15.03.2012 FR 1252332
(43) Date de publication de la demande: 18.09.2013
(73) Titulaire: KUHN S.A., 67700 Saverne (FR)
(72) Inventeur: Constant, Olivier, 67340 Weiterswiller (FR)
(74) Mandataire: Esch, Esther Evelyne

(56) Documents cités:
- FR-A1- 2 939 600
- US-A1- 2008 308 020
- US-A1- 2011 290 165
- US-A1- 2012 132 116

## Description

La présente invention se rapporte au domaine technique général du machinisme agricole et notamment aux machines agricoles destinées à implanter des graines dans le sol. L'invention concerne un semoir comportant un châssis et une barre de semis constituée d'éléments d'implantation alignés et disposés sur au moins une rangée sensiblement perpendiculairement à la direction d'avance, chaque élément d'implantation étant suivi d'une roue de contrôle, ladite barre de semis étant reliée audit châssis via un dispositif de liaison comprenant deux bras articulés, ledit dispositif de liaison étant déformable via un moyen de réglage pour modifier la profondeur de semis. Des semoirs de ce genre avec les caractéristiques du préambule de la revendication 1 sont connus par exemple de US 2011/0290165 et US 2012/0132116.

Sur des semoirs connus de ce genre, le châssis porte une trémie et une barre de semis. La barre de semis est constituée d'éléments d'implantation répartis sur plusieurs rangées. Une roue servant au contrôle de profondeur de semis suit chaque élément d'implantation. Les roues de contrôle réalisent aussi le rappui de la ligne de semis. La barre de semis s'étend transversalement à la direction d'avance dans la configuration de travail. La barre de semis est reliée au châssis au moyen d'un dispositif de liaison comprenant deux bras articulés. Ce dispositif de liaison est déformable via un moyen de réglage agissant sur les bras articulés. La position et la longueur des bras varient en fonction de la profondeur de semis souhaitée. La profondeur est modifiée en fonction de la graine à semer, du sol et des conditions climatiques. Afin de suivre le profil du sol, chaque élément d'implantation est relié à la barre de semis au moyen d'une structure de liaison réalisée sous forme d'un parallélogramme.

En pratique afin de diminuer la profondeur de semis, la longueur du bras supérieur du dispositif de liaison est augmentée pour que la barre de semis pivote dans le sens horaire autour de l'articulation mobile du bras inférieur. Ce pivotement fait plonger le parallélogramme. Les roues de contrôle se retrouvent alors en dessous des éléments d'implantation. Pour redresser le parallélogramme et obtenir une position horizontale de sa bielle inférieure par rapport au sol, il est nécessaire d'ajuster la hauteur de la barre de semis par rapport au châssis. Ainsi, la longueur du moyen de réglage du dispositif de liaison est réduite pour obtenir la position favorable et stable du parallélogramme. A l'inverse, pour augmenter la profondeur de semis, la longueur du bras supérieur est réduite pour faire pivoter la barre de semis dans le sens antihoraire, ce qui relève les roues de contrôle par rapport aux éléments d'implantation. Il faut alors allonger le moyen de réglage pour retrouver la position horizontale par rapport au sol de la bielle inférieure du parallélogramme. Par conséquent, chaque intervention pour modifier la profondeur entraîne toujours une adaptation en hauteur de la barre de semis pour replacer le parallélogramme à plat.

La présente invention a pour but de remédier aux inconvénients précités. Elle doit proposer un semoir avec un réglage simple et rapide de la profondeur de semis.

A cet effet, une importante caractéristique de l'invention consiste en ce que lesdits deux bras dudit dispositif de liaison sont disposés dans une position convergente vers l'arrière de telle sorte que le point d'intersection s'étend derrière un premier plan vertical passant par le point extrême avant desdits éléments d'implantation et en ce que chaque élément d'implantation est lié à ladite barre de semis par l'intermédiaire d'une structure de liaison et qu'une action sur ledit moyen de réglage ne modifie pas le terrage de ladite structure de liaison. Grâce à cette configuration, le réglage de la profondeur de semis des éléments d'implantation se fait simplement et en une seule opération. La profondeur d'implantation des graines peut être adaptée rapidement en fonction de l'espèce de graines semées et des conditions du sol.

Selon une mode de réalisation préféré, une modification de longueur du moyen de réglage entraîne une modification de profondeur desdits éléments d'implantation et le point de contact au sol desdites roues de contrôle reste sensiblement sur un même plan horizontal. Ainsi, puisque lors d'un réglage de profondeur, les éléments d'implantation pivotent par rapport aux roues de contrôle, l'orientation de la structure de liaison des éléments d'implantation est adaptée automatiquement.

D'autres caractéristiques et avantages de l'invention se dégageront de la description qui va suivre en regard des dessins annexés qui ne sont donnés qu'à titre d'exemples non limitatifs de l'invention avec référence. Sur ces dessins :
- la **figure 1** montre une représentation simplifiée en vue de côté d'un semoir selon la présente invention dans une configuration de travail profond,
- la **figure 2** est une vue latérale simplifiée d'un semoir dont la barre de semis est représentée avec trois réglages différents,
- la **figure 3** montre une représentation simplifiée en vue de côté d'un semoir selon un autre exemple de réalisation dans une configuration de travail intermédiaire.

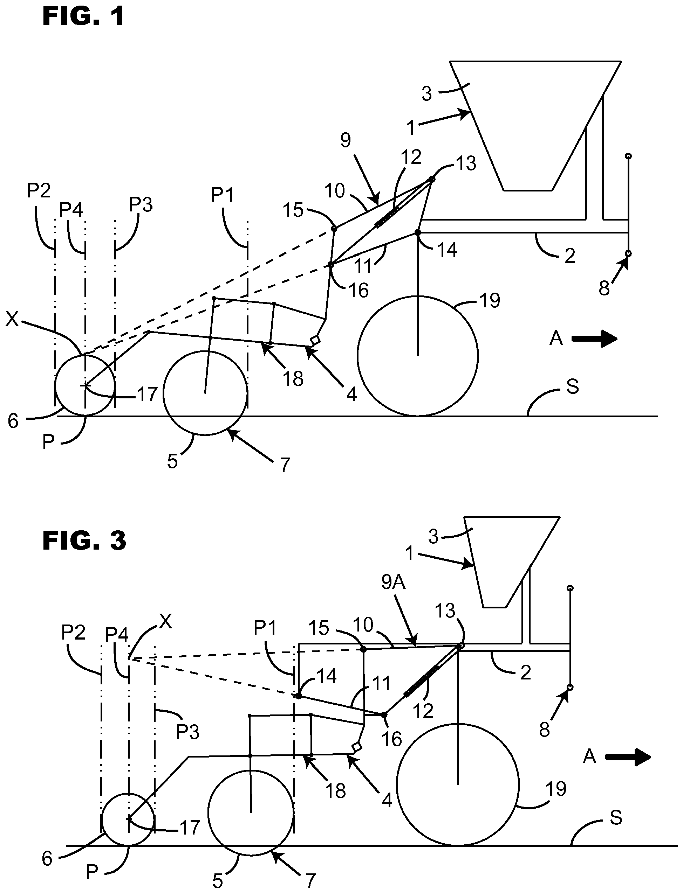

La machine agricole selon l'invention est un semoir (1) réalisant la mise en place des graines dans le sol. La figure 1 représente schématiquement un semoir au travail. Ce semoir (1) comporte un châssis (2), une trémie (3) fixée au châssis (2) et destinée à contenir la semence à implanter dans le sol. Le semoir (1) comporte également une barre de semis (4) constituée d'éléments d'implantation (5) destinés à implanter la semence dans le sol (S). Les éléments d'implantation (5) doivent fabriquer un sillon à une profondeur déterminée pour y placer la graine et la recouvrir. Chaque élément d'implantation (5) est suivi d'une roue de contrôle (6) de la profondeur de semis. Elle est placée derrière l'élément d'implantation (5) et participe à la fermeture du sillon en rappuyant la ligne de semis. La roue de contrôle (6) est destinée à pivoter autour d'un axe de rotation (17) sensiblement horizontal et perpendiculaire à la direction d'avance (A). Elle détecte la surface du sol dans le voisinage de l'élément d'implantation (5). Au travail, la roue de contrôle (6) roule en s'appuyant sur le sol et détermine ainsi la profondeur de semis de l'élément d'implantation (5). Dans l'exemple représenté, les éléments d'implantation (5) sont disposés sur au moins une rangée (7) sensiblement perpendiculairement à la direction d'avance (A). Le nombre de lignes de semis correspond au nombre d'éléments d'implantation (5).

Afin de pouvoir être déplacé, le semoir (1) comporte également un dispositif d'attelage (8) destiné à être attelé à un tracteur (non représenté). Le tracteur est amené à déplacer et à animer le semoir (1) suivant une direction et un sens d'avance indiqué par la flèche (A). Dans la suite de la description, les notions suivantes "avant", "arrière" et "devant", "derrière" sont définies par rapport au sens d'avance (A). Le semoir (1) comporte également un dispositif de dosage situé sous la trémie (3) et destiné à doser la semence et un dispositif d'acheminement destiné à acheminer la semence du dispositif de dosage vers les éléments d'implantation (5). Le transport des grains se fait par gravité ou par un flux d'air.

La barre de semis (4) est reliée audit châssis (2) via un dispositif de liaison (9) comprenant deux bras articulés (10, 11). Chaque extrémité des bras articulés (10, 11) présente une articulation (13, 14, 15, 16) respective d'axe sensiblement horizontal et perpendiculaire à la direction d'avance (A). Chaque bras (10, 11) présente une articulation fixe (13, 14) solidaire du châssis (2) et une articulation mobile (15, 16) reliée à la barre de semis (4). Le dispositif de liaison (9) est déformable via un moyen de réglage (12) pour modifier la profondeur de semis. Le choix de la profondeur de semis a pour objectif de placer la graine à un niveau compatible avec la nécessité d'obtenir une levée rapide. La profondeur est définie par l'espèce semée, la qualité du lit de semences, le type de sol et les conditions climatiques. La plage de réglage pour la profondeur de semis varie entre 0 et 15 cm.

Selon une importante caractéristique de l'invention, les deux bras (10, 11) du dispositif de liaison (9) sont disposés dans une position convergente vers l'arrière de telle sorte que le point d'intersection (X) s'étend derrière un premier plan vertical (P1) passant par le point extrême avant desdits éléments d'implantation (5). Grâce à cette configuration, le réglage de la profondeur de semis des éléments d'implantation se fait simplement et en une seule opération. La profondeur d'implantation des graines peut être adaptée rapidement en fonction de l'espèce de graines semées et des conditions du sol. En effet, une action sur le moyen de réglage (12) entraîne d'une part une modification de la position et de l'orientation des bras (10, 11) et d'autre part une modification de l'inclinaison de la barre de semis (4). La profondeur du sillon pour la dépose des graines peut ainsi être réglée rapidement en fonction de l'espèce de graines semées et des conditions du sol. D'une manière avantageuse, le point d'intersection (X) s'étend entre le premier plan vertical (P1) et son plan vertical symétrique par rapport au plan passant par l'axe (17) de la roue de contrôle (6).

Selon une autre caractéristique, les deux bras (10, 11) du dispositif de liaison (9) sont disposés dans une position convergente vers l'arrière de telle sorte que le point d'intersection (X) s'étend entre ledit premier plan vertical (P1) et un deuxième plan vertical (P2) passant par le point extrême arrière desdites roues de contrôle (6).

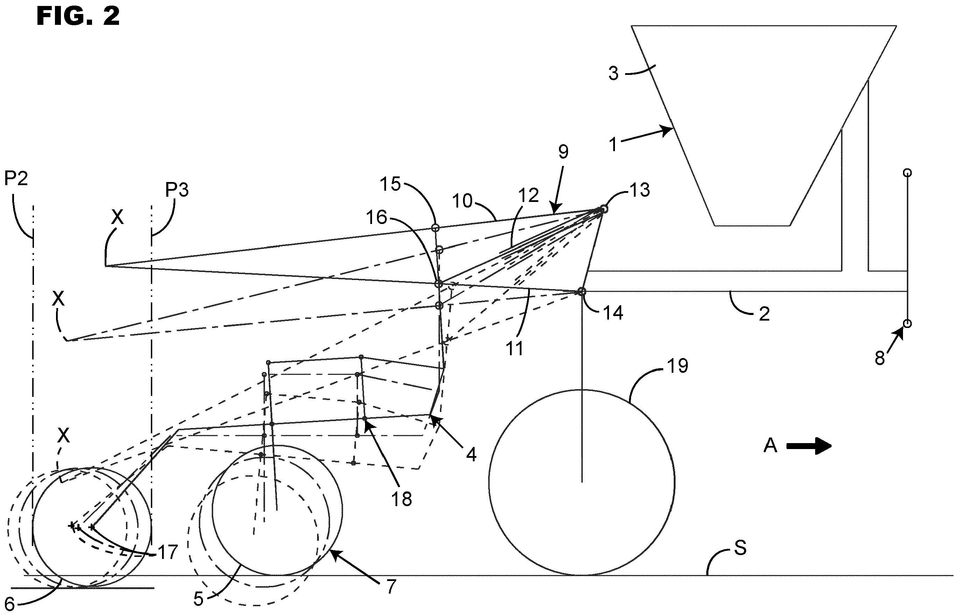

La figure 2 montre, en vue latérale et schématique, une barre de semis (4) avec trois réglages de profondeur par rapport à la surface du sol (S). La position de semis profond, telle que représentée à la figure 1, est représentée en traits discontinus. La représentation en traits continus correspond à un réglage permettant d'effectuer un semis superficiel. La longueur du moyen de réglage (12) a été réduite pour passer d'une profondeur profonde à superficielle. En traits mixtes, a été représenté un réglage intermédiaire correspondant à une profondeur de semis intermédiaire. On constate donc que l'action sur le moyen de réglage (12) entraîne une modification de profondeur des éléments d'implantation (5) et que le point de contact au sol (P) des roues de contrôle (6) reste sensiblement sur un même plan horizontal. Ce plan horizontal est confondu avec le sol (S) sur les figures 1 et 3 ou positionné légèrement en-dessous du sol (S) (figure 2) lorsque la roue de contrôle (6) est représentée comme appuyant la ligne de semis pour assurer un bon contact de la graine avec la terre. Le plan horizontal est sensiblement parallèle au sol (S). Lors d'un réglage de profondeur, la barre de semis (4) a tendance à tourner autour de la roue de contrôle (6). Le point d'intersection (X) réalise le centre instantané de rotation pour la barre de semis (4). La position en hauteur de la roue de contrôle (6) ne varie pas ou du moins dans des proportions négligeables.

Le dispositif de liaison (9) comporte un bras supérieur (10) et un bras inférieur (11). Les bras (10, 11) présentent une longueur différente. Le bras supérieur (10) présente une longueur plus importante que le bras inférieur (11). Ainsi, le point d'intersection (X) des bras (10, 11) s'étend et reste dans le voisinage des roues de contrôle (6). Les différentes articulations (13, 14, 15, 16) de ces deux bras (10, 11) sont disposées de manière à former un quadrilatère déformable. Le moyen de réglage (12) s'étend entre l'articulation fixe (13) du bras supérieur (10) et l'articulation mobile (16) du bras inférieur (11). Le moyen de réglage (12) est constitué par un organe de commande. Un tel organe pourra être actionné manuellement via une chandelle ou depuis la cabine du tracteur via un vérin par exemple. D'une manière avantageuse, le réglage en profondeur se fait de manière centralisée pour l'ensemble des éléments d'implantation (5) de la barre de semis (4).

De préférence, le point d'intersection (X) s'étend entre ledit deuxième plan vertical (P2) et un troisième plan vertical (P3) passant par la partie extrême avant des roues de contrôle (6). Lorsque le point d'intersection (X) est disposé entre ces deux plans (P2 et P3), la roue de contrôle (6) a tendance à s'approcher ou s'éloigner du châssis (2) lorsque la longueur du moyen de réglage (12) est modifiée, le point de contact (P) de la roue de contrôle (6) restant sur le plan horizontal. Lorsque le point d'intersection (X) s'étend dans la projection verticale de la roue de contrôle (6) au-dessus du sol (S), la hauteur de la roue de contrôle (6) ne varie pas (ou du moins dans des proportions négligeables) par rapport au sol (S).

Dans la configuration représentée sur la figure 1, le point d'intersection (X) se situe au voisinage d'un quatrième plan vertical (P4) passant par l'axe de rotation (17) des roues de contrôle (6). La roue de contrôle (6) demeure sur le plan horizontal.

Les éléments d'implantation (5) sont montés sur des structures de liaison (18) de façon à suivre les inégalités du terrain. Une telle structure de liaison est, par exemple, un parallélogramme ou une liaison via au moins un organe élastique. Sur les figures, chaque élément d'implantation (5) est monté individuellement sur une barre transversale au moyen d'un parallélogramme. Le parallélogramme est déformable dans un plan au moins sensiblement vertical. Il permet à l'élément d'implantation (5) de se déplacer parallèlement au sol pour suivre le profil du terrain. Chaque parallélogramme est équipé d'un système à ressort disposé de façon à exercer une force dirigée vers le bas sur l'élément d'implantation (5). Ce système à ressort permet de compenser la résistance opposée par le sol à la pénétration de l'élément d'implantation (5). On constate aussi que lors d'une modification de longueur du moyen de réglage (12), la tension du système à ressort reste identique. Le parallélogramme n'est donc pas déformé, par contre, son orientation par rapport au sol (S) évolue. Dans les représentations de la figure 2, les différents parallélogrammes sont sensiblement parallèles au sol (S). Le parallélogramme en traits continus est légèrement plongeant vers l'arrière, le parallélogramme en traits discontinus est légèrement plongeant vers l'avant et le parallélogramme en traits mixtes est parallèle au sol (S). Le point de contact au sol (P) des roues de contrôle (6) reste sensiblement sur un même plan horizontal sans déformation importante de la structure de liaison (18) lors d'une action sur le moyen de réglage (12). Sur les figures, les éléments d'implantation (5) sont constitués par des socs à disque double ou des socs à disque simple. Le point extrême avant correspond donc, vu transversalement à la direction d'avance (A), au point placé à l'horizontal de l'axe de rotation du disque et appartenant au diamètre du disque. Dans une alternative non représentée, les éléments d'implantation (5) sont constitués par des socs standards.

En fonction de l'encombrement en hauteur de la structure de liaison (18), la barre de semis (4) est susceptible d'être adaptée en hauteur par rapport au châssis (2). Une telle adaptation est alors indépendante du réglage en profondeur.

Sur la figure 3, apparaît un autre exemple de réalisation représentant un semoir. Celui-ci comporte une barre de semis identique à celle qui a été décrite dans l'exemple de réalisation précédent et un dispositif de liaison (9A) qui diffère du dispositif de liaison (9) précédent. On constate que les bras articulés (10, 11) sont croisés et qu'au moins une des articulations (13, 14, 15, 16) du dispositif de liaison (9A) est disposée derrière la barre transversale compte tenu de la direction d'avance (A). En effet, l'articulation fixe (14) du bras inférieur (11) s'étend derrière l'articulation mobile (16). L'articulation fixe (14) est disposée au voisinage de la structure de liaison (18). Cette disposition permet d'obtenir une solution plus compacte.

Dans une variante de réalisation non représentée, les éléments d'implantation (5) sont disposés sur au moins deux rangées (7) sensiblement perpendiculaires à la direction d'avance (A). Une disposition sur deux ou trois rangées réduit considérablement les risques de bourrage sur des sols encombrés par des mottes et des débris végétaux. Avec une disposition sur deux rangées, la rangée d'éléments d'implantation à prendre comme référence est la rangée la plus en avant, celle qui est la plus proche du châssis (2). Avec une disposition sur trois rangées, la rangée d'éléments d'implantation à prendre comme référence est la rangée intermédiaire, celle qui est entre la rangée avant et la rangée arrière. Lorsque les éléments d'implantation (5) s'étendent sur plusieurs rangées, les parallélogrammes respectifs présenteront des orientations plus ou moins parallèles à la surface du sol (S).

Lorsque la barre de semis (4) est constituée d'au moins deux parties, chaque partie est équipée d'un dispositif de liaison (9) et d'un moyen de réglage (12). Une telle barre de semis est alors repliable. Le transport des graines vers les éléments d'implantation (5) est dans ce cas pneumatique.

Dans une autre variante non représentée, la trémie contenant la semence n'est pas fixée sur le châssis (2), mais est montée à l'avant du tracteur. La semence est alors envoyée vers l'arrière via un tuyau d'acheminement et un flux d'air.

Le semoir (1) de l'invention est également destiné à être attelé à une machine de travail du sol (non représentée) pour former une machine combinée. Dans ce cas, le semoir est fixé sur le châssis de la machine de travail du sol et est relié indirectement au tracteur. Sur les figures, on remarque un organe de référence (19) permettant au semoir (1) et notamment au châssis (2) de s'appuyer sur le sol. Cet organe de référence (19) est par exemple un rouleau de rappuyage qui participe au travail du sol. Il fait partie de la machine de travail du sol. Cet organe de référence (19) détermine la profondeur de travail des outils de travail du sol.

Il est bien évident que l'invention n'est pas limitée aux modes de réalisation décrits ci-dessus et représentés sur les dessins annexés. Des modifications restent possibles, notamment en ce qui concerne la constitution ou le nombre des divers éléments ou par substitution d'équivalents techniques, sans pour autant sortir du domaine de protection tel qu'il est défini par les revendications suivantes.

## Revendications

1. Semoir (1) comportant un châssis (2) et une barre de semis (4) constituée d'éléments d'implantation (5) alignés et disposés sur au moins une rangée (7) sensiblement perpendiculairement à la direction d'avance (A), chaque élément d'implantation (5) étant suivi d'une roue de contrôle (6), ladite barre de semis (4) étant reliée audit châssis (2) via un dispositif de liaison (9) comprenant deux bras (10, 11) articulés, ledit dispositif de liaison (9) étant déformable via un moyen de réglage (12) pour modifier la profondeur de semis, lesdits deux bras (10, 11) dudit dispositif de liaison (9) étant disposés dans une position convergente vers l'arrière de telle sorte que le point d'intersection (X) s'étend derrière un premier plan vertical (P1) passant par le point extrême avant desdits éléments d'implantation (5) et **caractérisé en ce que** chaque élément d'implantation (5) est lié à ladite barre de semis (4) par l'intermédiaire d'une structure de liaison (18) et qu'une action sur ledit moyen de réglage (12) ne modifie pas le terrage de ladite structure de liaison (18).

2. Semoir selon la revendication 1, ***caractérisé en ce* qu'**une action sur ledit moyen de réglage (12) entraîne une modification de profondeur desdits éléments d'implantation (5) et que le point de contact au sol (P) desdites roues de contrôle (6) reste sensiblement sur un même plan horizontal.

3. Semoir selon la revendication 1 ou 2, ***caractérisé en ce que*** ledit point d'intersection (X) s'étend entre ledit premier plan vertical (P1) et un deuxième plan vertical (P2) passant par le point extrême arrière desdites roues de contrôle (6).

4. Semoir selon la revendication 3, ***caractérisé en ce que*** ledit point d'intersection (X) s'étend entre ledit deuxième plan vertical (P2) et un troisième plan vertical (P3) passant par la partie extrême avant desdites roues de contrôle (6).

5. Semoir selon la revendication 1 ou 2, ***caractérisé en ce que*** ledit point d'intersection (X) se situe au voisinage d'un quatrième plan vertical (P4) passant par l'axe de rotation (17) desdites roues de contrôle (6).

6. Semoir selon l'une quelconque des revendications 1 à 5, ***caractérisé en ce que*** lesdits bras (10, 11) présentent une longueur différente et que lesdites articulations (13, 14, 15, 16) dudit dispositif de liaison (9) forment un quadrilatère déformable.

7. Semoir selon la revendication 6, ***caractérisé en ce que*** lesdits bras (10, 11) sont croisés et qu'une articulation (14) dudit dispositif de liaison (9) est disposée derrière ladite barre de semis (4) compte tenu de la direction d'avance (A).

8. Semoir selon l'une quelconque des revendications 1 à 7, ***caractérisé en ce que*** lesdits éléments d'implantation (5) sont disposés sur au moins deux rangées (7).

9. Semoir selon l'une quelconque des revendications 1 à 8, ***caractérisé en ce que*** ledit moyen de réglage (12) agit sur lesdits éléments d'implantation (5) de manière centralisée.

## Patentansprüche

1. Sämaschine (1), mit einem Gestell (2) und einer Säschiene (4), die aus ausgerichteten Elementen zum Saateinsetzen (5), die auf mindestens einer Reihe (7) im Wesentlichen senkrecht zur Vorschubrichtung (A) angeordnet sind, gebildet ist, wobei jedes Element zum Saateinsetzen (5) von einem Bodentiefekontrollrad (6) gefolgt wird, wobei die Säschiene (4) mit dem Gestell (2) über eine Verbindungsvorrichtung (9) verbunden ist, die zwei Gelenkarme (10, 11) umfasst, wobei die Verbindungsvorrichtung (9) über ein Einstellmittel (12) verformbar ist, um die Sätiefe zu ändern, wobei die zwei Arme (10, 11) der Verbindungsvorrichtung (9) in einer nach hinten zusammenlaufenden Position angeordnet sind, sodass sich der Schnittpunkt (X) hinter einer ersten Vertikalebene (P1) erstreckt, die durch den vorderen Extrempunkt der Elemente zum Saateinsetzen (5) verläuft, ***dadurch gekennzeichnet, dass*** jedes Element zum Saateinsetzen (5) mit der Säschiene (4) mittels einer Verbindungsvorrichtung (18) verbunden ist und dass eine Betätigung des Einstellmittels (12) die Anpressdruck der Verbindungsvorrichtung (18) nicht ändert.

2. Sämaschine nach Anspruch 1, ***dadurch gekennzeichnet, dass*** eine Betätigung des Einstellmittels (12) eine Änderung der Tiefe der Elemente zum Saateinsetzen (5) nach sich zieht und dass der Kontaktpunkt mit dem Boden (P) der Bodentiefekontrollräder (6) im Wesentlichen auf einer gleichen horizontalen Ebene bleibt.

3. Sämaschine nach Anspruch 1 oder 2, ***dadurch gekennzeichnet, dass*** sich der Schnittpunkt (X) zwischen der ersten Vertikalebene (P1) und einer zweiten Vertikalebene (P2) erstreckt, die durch den hinteren Extrempunkt der Bodentiefekontrollräder (6) verläuft.

4. Sämaschine nach Anspruch 3, ***dadurch gekennzeichnet, dass*** sich der Schnittpunkt (X) zwischen der zweiten Vertikalebene (P2) und einer dritten Vertikalebene (P3) erstreckt, die durch den vorderen Extremteil der Bodentiefekontrollräder (6) verläuft.

5. Sämaschine nach Anspruch 1 oder 2, ***dadurch gekennzeichnet, dass*** sich der Schnittpunkt (X) in der Nähe einer vierten Vertikalebene (P4) befindet, die durch die Drehachse (17) der Bodentiefekontrollräder (6) verläuft.

6. Sämaschine nach irgendeinem der Ansprüche 1 bis 5, ***dadurch gekennzeichnet, dass*** die Arme (10, 11) eine unterschiedliche Länge aufweisen und dass die Gelenke (13, 14, 15, 16) der Verbindungsvorrichtung (9) ein verformbares Viereck bilden.

7. Sämaschine nach Anspruch 6, ***dadurch gekennzeichnet, dass*** sich die Arme (10, 11) kreuzen und dass ein Gelenk (14) der Verbindungsvorrichtung (9) hinter der Säschiene (4) angeordnet ist, unter Berücksichtigung der Vorschubrichtung (A).

8. Sämaschine nach irgendeinem der Ansprüche 1 bis 7, ***dadurch gekennzeichnet, dass*** die Elemente zum Saateinsetzen (5) auf mindestens zwei Reihen (7) angeordnet sind.

9. Sämaschine nach irgendeinem der Ansprüche 1 bis 8, ***dadurch gekennzeichnet, dass*** das Einstellmittel (12) auf die Elemente zum Saateinsetzen (5) zentral wirkt.

## Claims

1. Seed-drill (1) including a chassis (2) and a seed bar (4) comprising seed planting elements (5) aligned and positioned along at least one row (7) substantially perpendicular to the direction of advance (A), each seed planting element (5) being followed by a depth control wheel (6), said seed bar (4) being connected to said chassis (2) via a connecting device (9) comprising two articulated arms (10, 11), said connecting device (9) being deformable via an adjustment means (12) to modify the seed depth, said two arms (10, 11) of said connecting device (9) being arranged in a position converging towards the rear such that the point of intersection (X) extends behind a first vertical plane (P1) passing through the extreme front point of said seed planting elements (5), ***characterised in that*** each seed planting element (5) is connected to said seed bar (4) by means of a connecting structure (18) and that acting on said adjustment means (12) does not modify the coulter pressure of said connecting structure (18).

2. Seed-drill according to claim 1, ***characterised in that*** acting on said adjustment means (12) results in a modification to the depth of said seed planting elements (5), and that the soil contact point (P) of said depth control wheels (6) remains substantially on the same horizontal plane.

3. Seed-drill according to claim 1 or 2, ***characterised in that*** said point of intersection (X) extends between said first vertical plane (P1) and a second vertical plane (P2) passing through the extreme rear point of said depth control wheels (6).

4. Seed-drill according to claim 3, ***characterised in that*** said point of intersection (X) extends between said second vertical plane (P2) and a third vertical plane (P3) passing through the extreme front portion of said depth control wheels (6).

5. Seed-drill according to claim 1 or 2, ***characterised in that*** said point of intersection (X) is located in the vicinity of a fourth vertical plane (P4) passing through the rotation axis (17) of said depth control wheels (6).

6. Seed-drill according to any one of claims 1 to 5, ***characterised in that*** said arms (10, 11) are of different lengths, and that said articulations (13, 14, 15, 16) of said connecting device (9) form a deformable quadrilateral.

7. Seed-drill according to claim 6, ***characterised in that*** said arms (10, 11) are crossed, and that one articulation (14) of said connecting device (9) is positioned behind said seed bar (4), taking the direction of advance (A) into account.

8. Seed-drill according to any one of claims 1 to 7, ***characterised in that*** said seed planting elements (5) are positioned along at least two rows (7).

9. Seed-drill according to any one of claims 1 to 8, ***characterised in that*** said adjustment means (12) acts on said seed planting elements (5) in a centralised manner.
